# FASCICULE DE BREVET EUROPEEN

(11) **EP 0 723 931 B1**
(45) Date de publication et mention de la délivrance du brevet: **11.08.1999**
(21) Numéro de dépôt: 96400172.1
(22) Date de dépôt: 25.01.1996
(51) Int. Cl.: C01B 21/04, B01D 53/00, C01B 23/00

(54) **Procédé pour l'élimination d'une impureté contenue dans un composé gazeux**
Verfahren zur Entfernung von Verunreinigungen aus einer gasförmigen Verbindung
Process for the elimination of impurities from a gaseous composition

(30) Priorité: 25.01.1995 FR 9500832
(43) Date de publication de la demande: 31.07.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny le Bretonneux (FR)
(74) Mandataire: Le Moenner, Gabriel

(56) Documents cités:
- EP-A- 0 222 497
- EP-A- 0 395 856
- EP-A- 0 454 531
- FR-A- 2 690 357
- US-A- 4 136 062
- CHEMICAL ABSTRACTS, vol. 107, no. 20, 16 Novembre 1987 Columbus, Ohio, US; abstract no. 179530a, Y. CHEN ET AL.: "Catalyst for removal of hydrogen and oxygen from inert gases." page 211; XP002000894 & CN-A-0 102 708 (DALIAN INSTITUTE OF CHEMICAL PHYSICS)

## Description

L'invention concerne un procédé pour l'élimination substantielle de l'une au moins des impuretés monoxyde de carbone et hydrogène contenues dans un composé gazeux, notamment un mélange d'azote et/ou d'argon avec de l'oxygène, tel l'air, selon lequel on fait réagir l'une desdites impuretés avec de l'oxygène au contact d'un catalyseur.

De grandes quantités de gaz inerte, en particulier l'argon et surtout l'azote, sont utilisées par exemple dans l'industrie pharmaceutique et l'industrie électronique, notamment lors de la fabrication des semi-conducteurs. Dans ce dernier cas surtout, ces gaz inertes doivent être le plus purs possible, et, notamment, ils doivent être substantiellement exempts en des impuretés telles que le monoxyde de carbone et l'hydrogène, qui amoindrissent la qualité et les performances des semi-conducteurs. Récemment des teneurs en monoxyde de carbone et/ou d'hydrogène de l'ordre de quelques centaines de ppb (parties par milliard en volume) étaient encore tolérées.

Mais à présent, l'industrie électronique requiert des gaz inertes, tel l'azote, de haute pureté, c'est-à-dire contenant environ moins de 10 ppb en hydrogène et moins de 5 ppb en monoxyde de carbone.

Il a déjà été proposé dans la demande de brevet GB-A-2.234.450, un procédé pour oxyder des composés de faible poids moléculaire, tels le monoxyde de carbone, l'hydrogène et des hydrocarbures. Selon ce procédé, l'oxydation est réalisée en présence d'un catalyseur consistant en au moins un métal précieux supporté par un oxyde d'un métal réducteur choisi parmi Fe₂O₃, Ce₂O₃, ZrO₂, CaO, TiO₂, les oxydes de terres rares, MnO₂, V₂O₅ et Cr₂O₃.

Plus particulièrement, ce document décrit dans l'un de ses exemples, un procédé pour la conversion du monoxyde de carbone contenu dans de l'air, à l'aide d'un catalyseur comprenant du platine supporté par du dioxyde de titane, associé à de l'alumine alpha.

La Demanderesse a cependant pu constater qu'un tel catalyseur ne permet pas une élimination efficace du monoxyde de carbone et de l'hydrogène.

En vue de préparer de l'azote de haute pureté, la Demanderesse a décrit dans la demande de brevet EP-A-0.454.531, un procédé selon lequel on élimine de l'air, les impuretés monoxyde de carbone et/ou hydrogène, par passage de cet air sur un catalyseur constitué de particules d'au moins un élément métallique choisi dans le groupe constitué par le cuivre et les métaux de la famille du platine, à savoir le ruthénium, le rhodium, le palladium, l'osmium, l'iridium et le platine, ces particules étant supportées sur un support présentant une forte surface spécifique. Lesdits supports peuvent consister en des zéolithes, de la silice ou de l'alumine. L'air traité par passage sur le catalyseur est, le plus souvent, de l'air comprimé au moyen d'un compresseur ; à la sortie de ce compresseur, l'air présente une température habituellement comprise entre 80°C et 120°C. L'air ainsi purifié est débarrassé de l'eau et du dioxyde de carbone qu'il contient, par exemple par adsorption sur un tamis moléculaire. Après quoi, l'air est envoyé dans une colonne de distillation en vue de la séparation de l'azote des autres constituants de l'air, essentiellement l'oxygène. La Demanderesse a pu constater que de bons résultats ont pu être obtenus au moyen de ce procédé, en particulier lorsque les catalyseurs comportent des teneurs importantes en des particules telles le palladium et le platine. Cependant, ces métaux précieux sont d'un coût relativement élevé, ce qui renchérit d'autant le procédé global de préparation de l'azote de haute pureté.

Par ailleurs, il a pu être constaté par la Demanderesse que les catalyseurs décrits dans la demande de brevet EP-A-0.454.531 devaient, pour une élimination efficace du monoxyde de carbone et de l'hydrogène, être soit régénérés fréquemment, par exemple deux fois par jour, soit être mis en contact avec de l'air comprimé dont la température est portée à environ 200°C.

La régénération fréquente du catalyseur entraîne la mise en oeuvre de deux lits de catalyseurs mis en parallèle et fonctionnant en alternance, l'un permettant l'épuration de l'air tandis que l'autre est régénéré. Comme indiqué plus haut, l'air comprimé sort du compresseur à une température habituellement comprise entre 80°C et 120°C. Il convient donc de disposer de moyens de chauffage pour porter l'air entrant au contact du catalyseur à une température de 200°C. On constate que la mise en oeuvre des catalyseurs selon la demande de brevet EP-A-0.454.531 requiert une installation onéreuse, notamment du fait desdits moyens de chauffage, et coûteuse en énergie.

On connait aussi du document CN-A-85/102708 un catalyseur pour l'élimination de H₂ et O₂ des gaz inertes prévoyant l'utilisation de palladium sur le support de TᵢO₂. Cependant ce catalyseur est essentiellement basé sur l'utilisation de cuivre sous forme CuOₓ en fortes proportions.

La Demanderesse a alors cherché un procédé pour éliminer substantiellement l'une au moins des impuretés monoxyde de carbone et hydrogène obviant aux inconvénients mentionnés plus haut.

Ainsi, un premier objet de l'invention consiste en un procédé pour éliminer l'une desdites impuretés d'un comprimé gazeux, pouvant être mis en oeuvre au moyen d'un catalyseur ayant une teneur faible en métaux précieux.

Un second objet de l'invention consiste en un tel procédé pouvant être réalisé sur une longue période de temps, par exemple plusieurs semaines, voire plusieurs mois ou même plusieurs années, sans qu'il soit nécessaire de régénérer le catalyseur, ou de porter le composé gazeux à traiter à une température de l'ordre de 200°C.

La présente invention concerne un procédé pour l'élimination substantielle de l'une au moins des impuretés monoxyde de carbone et hydrogène contenues dans un composé gazeux, caractérisé en ce que :
(a) on fait réagir l'une au moins des impuretés monoxyde de carbone et hydrogène contenues dans ledit composé gazeux avec de l'oxygène, au contact d'un catalyseur comprenant des particules d'au moins un métal choisi dans le groupe constitué par l'or et le palladium, ces particules étant supportées par du dioxyde de titane et ledit catalyseur ne comportant pas de cuivre, pour former, respectivement, du dioxyde de carbone et de l'eau ;
(b) le cas échéant, on élimine le dioxyde de carbone et l'eau formés dudit composé gazeux ;
(c) on récupère ledit composé gazeux substantiellement exempt en ses impuretés monoxyde de carbone et/ou hydrogène.

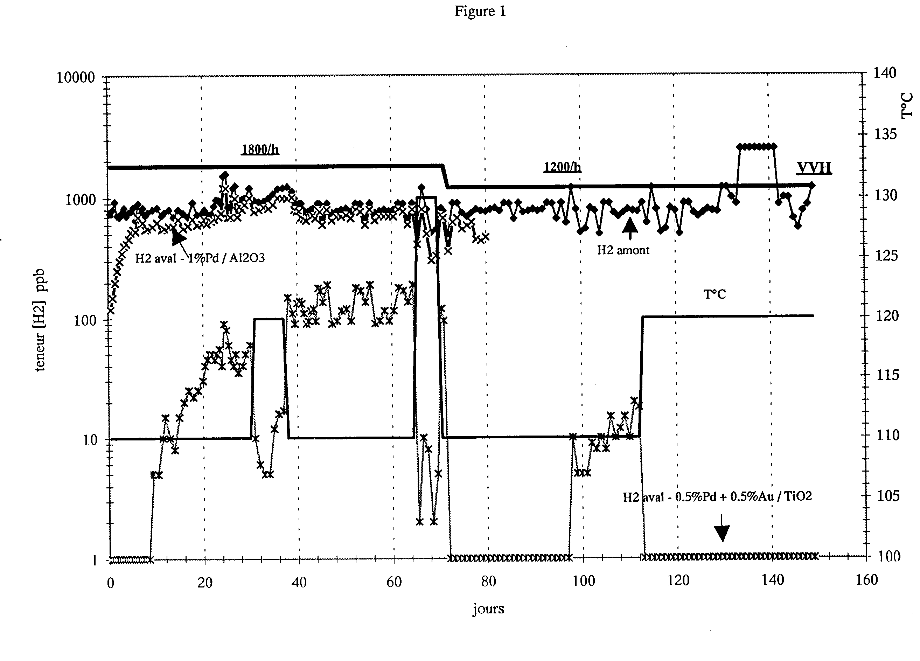

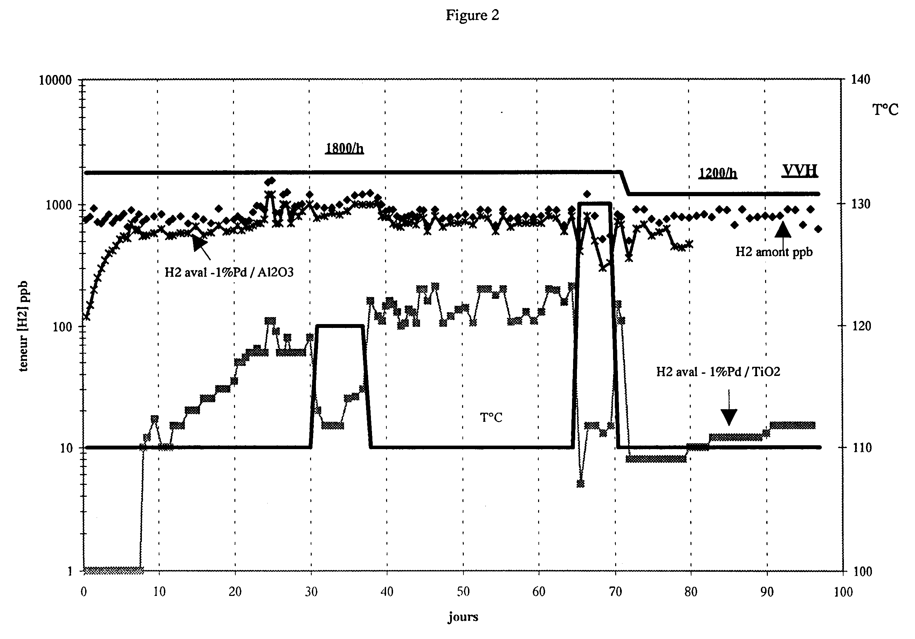

L'invention est décrite plus en détail ci-après, et au regard des figures 1 et 2.
La figure 1 représente l'élimination de l'hydrogène de l'air, d'une part selon le procédé de l'invention avec mise en oeuvre d'un catalyseur comprenant du palladium et de l'or supporté par du dioxyde de titane et, d'autre part, un procédé non conforme à l'invention avec mise en oeuvre d'un catalyseur comprenant du palladium supporté par de l'alumine.
La figure 2 représente l'élimination de l'hydrogène de l'air, d'une part selon le procédé de l'invention avec mise en oeuvre d'un catalyseur comprenant du palladium supporté par du dioxyde de titane et, d'autre part, un procédé non conforme à l'invention mis en oeuvre avec un catalyseur comprenant du palladium supporté par de l'alumine.

La teneur en poids des particules d'or supportées par le support de dioxyde de titane est généralement comprise entre 0,1 % et 2,5 %, de préférence comprise entre 0,1 et 0,7 %, par rapport au poids total dudit catalyseur. La teneur en poids des particules de palladium supportées par le support de dioxyde de titane est comprise généralement entre 0,3 et 2,5 %, de préférence entre 0,3 et 1 % par rapport au poids total du catalyseur.

Selon un mode de réalisation avantageux de l'invention, le catalyseur est constitué de particules supportées d'or et de palladium. Dans ce cas, le rapport pondéral entre les particules d'or et les particules de palladium est généralement compris entre 25/75 et 75/25, de préférence, il est de l'ordre de 50/50.

Le catalyseur selon l'invention peut être enrobé par une couche d'oxyde de cérium (CeO₂), ce notamment en vue d'en améliorer les propriétés mécaniques. Le poids de cet oxyde de cérium peut être compris entre 5 et 15 % par rapport au poids total du catalyseur.

Le support peut se présenter sous différentes formes, par exemple sous forme de copeaux ou de nids d'abeille (structure monolithe). De préférence il est sous forme de billes ou de bâtonnets pouvant être facilement disposé(e)s dans un réacteur. Le support est habituellement poreux et peut présenter un volume de pores inférieur ou égal à 1 cm³/g, de préférence compris entre 0,2 et 0,5 cm³/g. Le rayon des pores peut être inférieur ou égal à 25 nm, et de préférence, il est compris entre 1 et 15 nm. La surface spécifique de ce support en dioxyde de titane peut être comprise entre 10 et 300 m²/g, de préférence entre 50 et 250 m²/g et plus préférentiellement entre 50 et 150 m²/g.

La masse volumique du support peut être comprise entre 500 et 1000 g/l, de préférence comprise entre 600 et 900 g/l.

Le catalyseur mis en oeuvre dans le procédé de l'invention peut être préparé selon des procédés connus de co-précipitation ou, de préférence, d'imprégnation.

Pour préparer un tel catalyseur, on peut imprégner le support avec une solution comprenant un sel d'or, un sel de palladium, ou un mélange de tels sels. Ledit sel d'or ou ledit sel de palladium peut être un halogénure, notamment un chlorure ou, avantageusement, un nitrate. Après imprégnation, on sèche le support imprégné, par exemple en le soumettant pendant une période de 12 à 48 heures à une température comprise entre 50 °C et 150°C. On calcine alors le support, de préférence à une température comprise entre 300°C et 550°C. La calcination du support imprégné et séché peut être effectuée à l'air, de préférence un air sec. Après calcination, les particules de métal sont réduites à chaud, par exemple par balayage au moyen d'un gaz réducteur, tel l'hydrogène ou un mélange d'hydrogène et d'un gaz inerte tel l'azote.

Le procédé selon l'invention peut être notamment mis en oeuvre pour un composé gazeux consistant en un mélange d'au moins un gaz inerte avec de l'oxygène. Le gaz inerte peut être de l'azote ou de l'argon ; de préférence, le composé gazeux est de l'air.

La réaction des impuretés monoxyde de carbone et hydrogène au contact du catalyseur peut être réalisée avec de l'oxygène contenu, le cas échéant, dans le composé gazeux, notamment lorsque celui-ci consiste en de l'air, ou avec de l'oxygène additionné audit composé gazeux. La quantité d'oxygène ainsi additionnée doit au moins correspondre à la quantité stoechiométrique requise pour former du dioxyde de carbone et de l'eau, à partir desdites impuretés.

La réaction entre lesdites impuretés et l'oxygène au contact du catalyseur est habituellement réalisée avec un composé gazeux dont la température est inférieure à 130°C, plus particulièrement à une température comprise entre -40°C et 130°C, et de préférence une température comprise entre 80 et 120°C.

Lors de la réaction des impuretés avec l'oxygène au contact du catalyseur selon le procédé de la présente invention, le composé gazeux peut être soumis à une pression comprise entre 10⁵ et 3.10⁶ Pa, plus généralement entre 7.10⁵ et 1,5.10⁶ Pa.

Le composé gazeux mis au contact du catalyseur présente une vitesse spatiale réelle qui est fonction de la pression et de la température du composé gazeux traité. Généralement, la vitesse spatiale réelle est inférieure à 2000 h⁻¹, et de préférence comprise entre 500 et 1800 h⁻¹.

Les teneurs en monoxyde de carbone et en hydrogène du composé gazeux traité selon le procédé de l'invention sont habituellement inférieures à 40 ppm (parties par million en volume), plus généralement de l'ordre de 1 ppm à 200 ppb, en chacune de ces impuretés. Le composé gazeux récupéré après mise en oeuvre du procédé selon l'invention peut comporter moins de 10 ppb d'hydrogène et moins de 5 ppb de monoxyde de carbone. Ces teneurs sont celles répondant habituellement au cahier des charges dans l'industrie électronique.

Après la réaction entre lesdites impuretés et l'oxygène, le dioxyde de carbone et l'eau formés peuvent être éliminés dudit composé gazeux. Cette élimination peut être réalisée de manière classique au moyen d'un adsorbant tel un tamis moléculaire ou de l'alumine. Cette élimination de l'eau et du dioxyde de carbone est plus particulièrement requise lorsque le composé gazeux est de l'air destiné à être ultérieurement traité par distillation cryogénique en vue de la séparation de l'azote des autres constituants de l'air, essentiellement l'oxygène et, le cas échéant, l'argon.

Le composé gazeux récupéré, exempt ou substantiellement exempt en ses impuretés monoxyde de carbone et hydrogène, peut, lorsqu'il consiste en un mélange de gaz, être ultérieurement traité en vue de séparer certains ou chacun des gaz qui le constituent. Ainsi, si ledit composé gazeux consiste en l'air, l'air récupéré subséquemment au procédé selon l'invention, peut être traité de sorte que l'on sépare l'azote et/ou l'argon de l'oxygène de l'air. Cette séparation peut être réalisée de manière classique par distillation cryogénique, par adsorption sélective (procédés PSA et VSA) ou par séparation membranaire.

Selon un autre aspect de l'invention, celle-ci concerne un procédé de préparation d'azote épuré substantiellement exempt en les impuretés monoxyde de carbone et hydrogène, à partir d'air, caractérisé en ce que :
(a) on fait réagir l'une au moins des impuretés monoxyde de carbone et hydrogène contenues dans l'air avec l'oxygène de cet air, au contact d'un catalyseur constitué de particules d'au moins un métal choisi dans le groupe constitué par l'or et le palladium, ces particules étant supportées par du dioxyde de titane, de sorte à former, respectivement, du dioxyde de carbone et de l'eau ;
(b) le cas échéant, on élimine de l'air le dioxyde de carbone et l'eau formés ;
(c) on sépare l'azote de l'oxygène de l'air ;
(d) on récupère de l'azote de haute pureté substantiellement exempt en les impuretés monoxyde de carbone et hydrogène.

Le procédé de séparation de l'azote de l'oxygène de l'air est préférentiellement un procédé classique de distillation cryogénique.

Les exemples qui suivent ont pour but d'illustrer la présente invention :

### Exemple 1:

Dans un réacteur, on a disposé un catalyseur conforme à l'invention comprenant des bâtonnets de dioxyde de titane supportant 0,5 % en poids de particules d'or et 0,5 % en poids de particules de palladium. Ce catalyseur peut être enrobé ou non par une couche d'oxyde de cérium.

Le dioxyde de titane utilisé en tant que support des catalyseurs présentait une masse volumique de 915 g/l et une surface spécifique de 140 m²/g. On a traité dans ce réacteur un flux d'air comprimé à 7 bar en vue d'en éliminer les impuretés monoxyde de carbone et hydrogène. La vitesse spatiale réelle de l'air au travers du réacteur était de 1800h⁻¹.

Les teneurs amont (à l'entrée du réacteur) et aval (à la sortie du réacteur) en les impuretés monoxyde de carbone et hydrogène contenues, ont été mesurées au moyen d'un analyseur RGA3 commercialisé par la société Trace Analytical, dont le seuil de détection est inférieur ou égal à 5 ppb pour l'hydrogène et inférieur à 3 ppb pour le monoxyde de carbone.

L'air entrant dans le réacteur contenait 1000 ppb d'hydrogène et 500 ppb de monoxyde de carbone.

La durée (en heures) de fonctionnement du catalyseur, ainsi que les teneurs aval en hydrogène et monoxyde de carbone de l'air récupéré à la sortie du réacteur, figurent dans le tableau I ci-après.

La durée de fonctionnement correspond à la période de temps pendant laquelle les teneurs aval en hydrogène et monoxyde de carbone correspondaient au cahier des charges de l'industrie électronique, soit une teneur inférieure à 10 ppb en hydrogène et une teneur inférieure à 5 ppb en monoxyde de carbone. L'essai est interrompu dès que les teneurs aval en lesdites impuretés dépassent celles fixées par le cahier des charges. Toutefois, lorsque l'essai montre une durée de fonctionnement supérieure strictement à 20 heures, celui-ci est interrompu volontairement par l'expérimentateur dans la mesure où celui-ci a considéré que la durée de l'essai était suffisamment probante quant à l'efficacité du catalyseur.

La teneur en eau de l'air amont, les teneurs en monoxyde de carbone et hydrogène de l'air aval, ainsi que la durée de fonctionnement du catalyseur figurent dans le tableau I ci-après.

**Tableau I**

| Essais | Température (°C) | CeO₂ | Teneurs aval (en ppb) | | H₂O (g/Nm³) | Durée (h) |
|---|---|---|---|---|---|---|
| | | | H₂ | CO | | |
| 1 | 100 | O | ND | 3 | 7 | 125 |
| 2 | 110 | O | ND | 3 | 10 | 50 |
| 3 | 110 | O | ND | 3 | 7 | 60 |
| 4 | 120 | O | ND | 3 | 10 | 24 |
| 5 | 100 | N | 10 | 3 | 10 | 20 |
| 6 | 110 | N | ND | 3 | 10 | 150 |
| ND = non détecté O = enrobage CeO₂ N = absence d'enrobage CeO₂ | | | | | | |

### Exemple 2:

On a disposé successivement dans un réacteur, différents catalyseurs conformes ou non à l'invention. Les catalyseurs conformes à l'invention étaient constitués de particules de palladium ou de particules de palladium et de particules d'or supportées par du dioxyde de titane. Les catalyseurs non conformes à l'invention consistaient en des particules de palladium ou des particules de palladium associées à des particules d'or supportées par de l'alumine.

Au moyen de ces catalyseurs, on a traité de l'air comprenant 800 ppb d'hydrogène et différentes concentrations en eau. On a examiné la température minimale nécessaire pour une élimination totale de l'hydrogène (soit une teneur au moins inférieure à 5 ppb, qui est la teneur minimale détectable par l'appareil de mesure).

Les résultats obtenus figurent dans le tableau II ci-après :

**Tableau II**

| Essais | Support | Teneur du catalyseur (% en poids) | | CeO₂ | Température minimale (°C) après 2 h de traitement | | | Température minimale (°C) après 50 h de traitement |
|---|---|---|---|---|---|---|---|---|
| | | Au | Pd | | - | | | |
| | | | | | H₂0 | | | H₂O |
| | | | | | 1g/Nm³ | 6g/Nm³ | 10g/Nm³ | 6g/Nm³ |
| 7 | TiO₂ | - | 2 | N | 70 | 115 | 120 | 115 |
| 8 | TiO₂ | 0,5 | 0,5 | O | - | 100 | 110 | 110 |
| 9 | TiO₂ | 0,5 | 0,5 | N | 70 | 100 | 110 | 100 |
| A | Al₂O₃ | - | 2 | N | 90 | 130 | - | 150 |
| B | Al₂O₃ | - | 2 | O | 100 | 110 | 120 | 130 |
| C | Al₂O₃ | 0,5 | 0,5 | O | 100 | 130 | - | 150 |

Les essais 7 à 9 sont conformes à l'invention ; les essais A à C sont non conformes à l'invention.

Les essais montrent qu'un support à base de dioxyde de titane permet d'épurer l'air de son impureté hydrogène à une température plus basse que celle requise lorsque le support est de l'alumine. On remarque également qu'après un temps de traitement de 50 heures, les catalyseurs comportant un support TiO₂ permettent encore une élimination efficace de l'hydrogène à des températures inférieures à 120°C. Au contraire, dans les mêmes conditions les catalyseurs comprenant un support à base d'alumine requièrent une température supérieure ou égale à 130°C pour une bonne élimination de l'hydrogène. Autrement dit, la mise en oeuvre du procédé selon l'invention permet de traiter de l'air directement à la sortie du compresseur, sans qu'il soit nécessaire de réchauffer cet air.

### Exemple 3:

On a disposé dans un réacteur, différents catalyseurs conformes (essais 10 et 11) ou non (essais 12 et 13) à l'invention. Les catalyseurs conformes à l'invention comprenaient 0,5 % en poids de particules de palladium ; ceux non conformes à l'invention comprenaient 0,5 % en poids de particules de platine. Tous les catalyseurs comprenaient un support de dioxyde de titane de masse volumique 915 g/l et de surface spécifique 140 m²/g.

Avec ces catalyseurs, on a traité de l'air comprenant :
- 900 ppb d'hydrogène,
- 600 ppb de monoxyde de carbone,
- 8,5 g d'eau par m³.

La vitesse spatiale de l'air traité était de 1800 h⁻¹.

Les résultats obtenus figurent dans le tableau III suivant.

**Tableau III**

| Essais | Particules supportées | Température de l'air °C | Teneurs aval (ppb) en | | Durée (h) |
|---|---|---|---|---|---|
| | | | H₂ | CO | |
| 10 | Pd | 110 | 20 | 3 | > 24 |
| 11 | Pd | 130 | ND | 3 | > 200 |
| 12 | Pt | 110 | 500 | 8 | 5 |
| 13 | Pt | 130 | 3 | 3 | 70 |
| ND = non déterminé | | | | | |

### Exemple 4:

Dans un réacteur identique à celui de l'exemple 1, on a disposé un catalyseur conformé à l'invention, consistant en des bâtonnets de dioxyde de titane supportant des particules de palladium et des particules d'or. La teneur en poids en palladium et or du catalyseur est de 0,5 % en chacun de ces métaux. La masse volumique du support du dioxyde de titane était de 780 g/l et sa surface spécifique était de 95 m²/g.

Parallèlement, dans un réacteur identique à celui de l'exemple 1, on a disposé un catalyseur non conforme à l'invention consistant en des billes d'aluminium supportant des particules de palladium. La concentration en palladium du catalyseur est de 1 % en poids.

On a traité dans chacun de ces réacteurs un même flux d'air (divisé en deux flux parallèles) comprimé à 7 bar et comportant environ 1000ppb d'hydrogène et 10 g/Nm³ d'eau. Pendant 72 jours, la vitesse spatiale réelle de l'air à l'entrée du réacteur était de 1800 h⁻¹ ; après quoi, la vitesse spatiale a été ramenée à 1200 h⁻¹. On a fait varier la température de l'air entrant dans chacun des réacteurs au cours du temps. La température était toujours comprise entre 110 et 130°C.

Les résultats obtenus sont représentés dans la figure 1. Ils montrent en particulier qu'un catalyseur conforme à l'invention comprenant un support à base de dioxyde de titane, permet une épuration de l'air en hydrogène conforme au cahier des charges de l'industrie électronique, soit une teneur en hydrogène dans l'air traité inférieure à 10 ppb. Lorsque la vitesse spatiale est de 1200 h⁻¹, il est possible de récupérer de l'air dont la teneur en hydrogène est inférieure à 10 ppb sur une longue période de temps.

De tels résultats n'ont pu être obtenus avec un catalyseur non conforme à l'invention dont le support est à base d'alumine. L'air débarrassé de son impureté hydrogène peut ensuite être traité par passage au contact d'une alumine en vue de l'élimination de l'eau formée ainsi que de l'eau et du dioxyde de carbone originellement contenus dans l'air traité. Après quoi, l'air ainsi purifié peut être distillé par distillation cryogénique, de manière classique, en vue d'obtenir de l'azote dont les teneurs en hydrogène sont identiques ou quasi-identiques à celles présentes dans l'air traité selon le procédé conforme à l'invention décrit ci-dessus.

### Exemple 5 :

Dans un dispositif identique à celui de l'exemple 3, comprenant deux réacteurs, on a disposé dans le premier réacteur un catalyseur à base d'alumine, identique à celui de l'exemple 3. Dans le second réacteur, on a disposé un catalyseur conforme à l'invention comprenant 1 % de palladium supporté par du dioxyde de titane. Ce support présentait les mêmes caractéristiques que celui mis en oeuvre dans l'exemple 3. L'air traité dans chacun de ces réacteurs présente les mêmes caractéristiques que celui traité dans l'exemple 3. Là encore, pendant 72 jours, la vitesse spatiale réelle de l'air à l'entrée du réacteur était de 1800 h⁻¹ ; après quoi, la vitesse spatiale a été ramenée à 1200 h⁻¹.

Les résultats obtenus sont représentés sur la figure 2. Ils montrent que la teneur en hydrogène dans l'air traité conformément au procédé de l'invention reste conforme au cahier des charges de l'industrie électronique, à une température de l'air de 110°C, sur une période d'environ 9 jours. Lorsque la vitesse spatiale réelle de l'air est ramenée à 1200 h⁻¹, un catalyseur conforme à la présente invention permet de maintenir la teneur en hydrogène dans l'air traité à une teneur inférieure ou très légèrement supérieure à celle requise par le cahier des charges de l'industrie électronique (soit une teneur inférieure à 10 ppb) ; ce sur une période de temps prolongée.

Au contraire, un catalyseur non conforme à l'invention, comprenant un support à base d'alumine, ne permet pas l'obtention d'air dont la teneur en hydrogène est conforme au cahier des charges de l'industrie électronique.

L'air débarrassé de son impureté hydrogène peut ensuite être traité par passage au contact d'une alumine en vue de l'élimination de l'eau formée ainsi que de l'eau et du dioxyde de carbone originellement contenus dans l'air traité. Après quoi, l'air ainsi purifié peut être distillé par distillation cryogénique, de manière classique, en vue d'obtenir de l'azote dont les teneurs en hydrogène sont identiques ou quasi-identiques à celles présentes dans l'air traité selon le procédé conforme à l'invention décrit ci-dessus.

## Revendications

1. Procédé pour l'élimination substantielle de l'une au moins des impuretés monoxyde de carbone et hydrogène contenues dans un composé gazeux, caractérisé en ce que :
(a) on fait réagir l'une au moins des impuretés monoxyde de carbone et hydrogène contenues dans ledit composé gazeux avec de l'oxygène, au contact d'un catalyseur comprenant des particules d'au moins un métal choisi dans le groupe constitué par l'or et le palladium, ces particules étant supportées par du dioxyde de titane et ledit catalyseur ne comportant pas de cuivre, pour former, respectivement, du dioxyde de carbone et de l'eau ;
(b) le cas échéant, on élimine le dioxyde de carbone et l'eau formés dudit composé gazeux ;
(c) on récupère ledit composé gazeux substantiellement exempt en ses impuretés monoxyde de carbone et/ou d'hydrogène.

2. Procédé selon la revendication 1, caractérisé en ce que le catalyseur comprend des particules supportées d'or et de palladium.

3. Procédé selon la revendication 2, caractérisé en ce que le rapport pondéral entre les particules d'or et les particules de métal de la famille du platine est compris entre 75/25 et 25/75, de préférence de l'ordre de 50/50.

4. Procédé selon l'une des revendications 1 à 3, caractérisé en ce que la teneur en poids des particules d'or est comprise entre 0,1 % et 2,5 %, de préférence entre 0,1 et 0,7 % par rapport au poids total dudit catalyseur.

5. Procédé selon l'une des revendications 1 à 4, caractérisé en ce que la teneur en poids des particules de palladium est compris entre 0,3 et 2,5 %, de préférence entre 0,3 et 1 % par rapport au poids total du catalyseur.

6. Procédé selon l'une des revendications 1 à 5, caractérisé en ce que le composé gazeux est un mélange d'au moins un gaz inerte et d'oxygène, notamment un mélange comprenant de l'oxygène et de l'azote.

7. Procédé selon l'une des revendications 1 à 6, caractérisé en ce que le composé gazeux est de l'air.

8. Procédé selon l'une des revendications 1 à 7, caractérisé en ce que le composé gazeux au contact du catalyseur est soumis à une pression comprise entre 10⁵ et 3.10⁶ Pa, de préférence entre 7.10⁵ et 1,5.10⁶ Pa.

9. Procédé selon l'une des revendications précédentes, caractérisé en ce que la température du gaz mis au contact du catalyseur est inférieure à 130°C et de préférence comprise entre 80 et 120°C, et la vitesse spatiale réelle inférieure à 2000 h⁻¹, de préférence comprise entre 500 et 1800 h⁻¹.

10. Procédé de préparation d'azote à partir d'air contenant l'une au moins des impuretés monoxyde de carbone et hydrogène, caractérisé en ce que :
(a) on fait réagir l'une au moins des impuretés monoxyde de carbone et hydrogène contenues dans l'air avec l'oxygène de cet air, au contact d'un catalyseur comprenant des particules d'au moins un métal choisi dans le groupe constitué par l'or et le palladium, ces particules étant supportées par du dioxyde de titane, de sorte à former, respectivement, du dioxyde de carbone et de l'eau ;
(b) le cas échéant, on retire le dioxyde de carbone et l'eau formés ;
(c) on sépare l'azote de l'air;
(d) on récupère de l'azote de haute pureté substantiellement exempt en les impuretés monoxyde de carbone et hydrogène.

11. Procédé selon la revendication 10, caractérisé en ce qu'on sépare l'azote de l'oxygène de l'air par distillation cryogénique.

## Claims

1. Process for the substantial removal of at least one of the carbon monoxide and hydrogen impurities contained in a composite gas, characterized in that:
(a) at least one of the carbon monoxide and hydrogen impurities contained in the said composite gas is reacted with oxygen, in contact with a catalyst comprising particles of at least one metal chosen from the group consisting of gold and palladium, these particles being supported by titanium dioxide and the said catalyst not containing any copper, in order respectively to form carbon dioxide and water;
(b) optionally, the carbon dioxide and the water formed are removed from the said composite gas;
(c) the said composite gas, substantially free of its carbon monoxide and/or hydrogen impurities, is recovered.

2. Process according to Claim 1, characterized in that the catalyst comprises supported gold and palladium particles.

3. Process according to Claim 2, characterized in that the weight ratio between the gold particles and the particles of metal in the platinum series is between 75/25 and 25/75, preferably of the order of 50/50.

4. Process according to one of Claims 1 to 3, characterized in that the content by weight of the gold particles is between 0.1% and 2.5%, preferably between 0.1% and 0.7% relative to the total weight of the said catalyst.

5. Process according to one of Claims 1 to 4, characterized in that the content by weight of the palladium particles is between 0.3 and 2.5%, preferably between 0.3 and 1%, relative to the total weight of the catalyst.

6. Process according to one of Claims 1 to 5, characterized in that the composite gas is a mixture of at least one inert gas and oxygen, in particular a mixture comprising oxygen and nitrogen.

7. Process according to one of Claims 1 to 6, characterized in that the composite gas is air.

8. Process according to one of Claims 1 to 7, characterized in that the composite gas in contact with the catalyst is subjected to a pressure of between 10⁵ and 3.10⁶ Pa, preferably between 7.10⁵ and 1.5.10⁶ Pa.

9. Process according to one of the preceding claims, characterized in that the temperature of the gas brought into contact with the catalyst is less than 130°C and preferably between 80 and 120°C, and the actual space-time yield is less than 2000 h⁻¹, preferably between 500 and 1800 h⁻¹.

10. Process for the preparation of nitrogen from air containing at least one of the impurities carbon monoxide and hydrogen, characterized in that:
(a) at least one of the impurities carbon monoxide and hydrogen contained in the air is reacted with the oxygen in this air, in contact with a catalyst comprising particles of at least one metal chosen from the group consisting of gold and palladium, these particles being supported by titanium dioxide, so as respectively to form carbon dioxide and water;
(b) optionally, the carbon dioxide and the water formed are withdrawn;
(c) the nitrogen is separated from the air;
(d) high-purity nitrogen, substantially free from the carbon monoxide and hydrogen impurities, is recovered.

11. Process according to Claim 10, characterized in that the nitrogen and the oxygen in the air are separated by cryogenic distillation.

## Patentansprüche

1. Verfahren zur weitgehenden Entfernung von mindestens einer der in einem Gasgemisch enthaltenen Verunreinigungen Kohlenstoffmonoxid und Wasserstoff, dadurch gekennzeichnet, daß:
(a) man mindestens eine der in dem Gasgemisch enthaltenen Verunreinigungen Kohlenstoffmonoxid und Wasserstoff mit Sauerstoff in Kontakt mit einem Katalysator, der Teilchen mindestens eines Metalls ausgewählt aus der Gruppe bestehend aus Gold und Palladium enthält, wobei diese Teilchen auf einem Träger aus Titandioxid angeordnet sind und der Katalysator kein Kupfer enthält, zu Kohlenstoffdioxid bzw. Wasser umsetzt;
(b) man gegebenenfalls das entstehende Kohlenstoffdioxid und Wasser aus dem Gasgemisch entfernt; und
(c) man das Gasgemisch, das im wesentlichen frei von seinen Verunreinigungen Kohlenstoffmonoxid und/oder Wasserstoff ist, zurückgewinnt.

2. Verfahren nach Anspruch 1, dadurch gekennzeichnet, daß der Katalysator auf einem Träger angeordnete Gold- und Palladiumteilchen enthält.

3. Verfahren nach Anspruch 2, dadurch gekennzeichnet, daß das Gewichtsverhältnis der Goldteilchen zu den Teilchen des Metalls aus der Platingruppe zwischen 75:25 und 25:75, vorzugsweise in der Größenordnung von 50:50 liegt.

4. Verfahren nach einem der Ansprüche 1 bis 3, dadurch gekennzeichnet, daß der Gewichtsanteil der Goldteilchen zwischen 0,1% und 2,5%, vorzugsweise zwischen 0,1 und 0,7%, bezogen auf das Gesamtgewicht des Katalysators, liegt.

5. Verfahren nach einem der Ansprüche 1 bis 4, dadurch gekennzeichnet, daß der Gewichtsanteil der Palladiumteilchen zwischen 0,3 und 2,5%, vorzugsweise zwischen 0,3 und 1%, bezogen auf das Gesamtgewicht des Katalysators, liegt.

6. Verfahren nach einem der Ansprüche 1 bis 5, dadurch gekennzeichnet, daß das Gasgemisch ein Gemisch aus mindestens einem Inertgas und Sauerstoff, insbesondere ein Gemisch aus Sauerstoff und Stickstoff ist.

7. Verfahren nach einem der Ansprüche 1 bis 6, dadurch gekennzeichnet, daß das Gasgemisch Luft ist.

8. Verfahren nach einem der Ansprüche 1 bis 7, dadurch gekennzeichnet, daß das Gasgemisch in Kontakt mit dem Katalysator unter einen Druck zwischen 10⁵ und 3·10⁶ Pa, vorzugsweise zwischen 7·10⁵ und 1,5·10⁶ Pa gesetzt wird.

9. Verfahren nach einem der vorhergehenden Ansprüche, dadurch gekennzeichnet, daß die Temperatur des mit dem Katalysator in Kontakt gebrachten Gases unterhalb 130°C und vorzugsweise zwischen 80 und 120°C liegt und die tatsächliche Raumgeschwindigkeit unterhalb 2000 h⁻¹, vorzugsweise zwischen 500 und 1800 h⁻¹ liegt.

10. Verfahren zur Herstellung von Stickstoff aus mindestens eine der Verunreinigungen Kohlenstoffmonoxid und Wasserstoff enthaltender Luft, dadurch gekennzeichnet, daß:
(a) man mindestens eine der in der Luft enthaltenen Verunreinigungen Kohlenstoffmonoxid und Wasserstoff mit dem Luftsauerstoff in Kontakt mit einem Katalysator, der Teilchen mindestens eines Metalls ausgewählt aus der Gruppe bestehend aus Gold und Palladium enthält, wobei diese Teilchen auf einem Träger aus Titandioxid angeordnet sind, zu Kohlenstoffdioxid bzw. Wasser umsetzt;
(b) man gegebenenfalls das entstehende Kohlenstoffdioxid und Wasser entfernt;
(c) man den Stickstoff von der Luft trennt; und
(d) man hochreinen Stickstoff, der im wesentlichen frei von den Verunreinigungen Kohlenstoffmonoxid und Wasserstoff ist, zurückgewinnt.

11. Verfahren nach Anspruch 10, dadurch gekennzeichet, daß man den Stickstoff vom Luftsauerstoff durch Tieftemperaturdestillation abtrennt.
